# FASCICULE DE BREVET EUROPEEN

(11) **EP 2 018 698 B1**
(45) Date de publication et mention de la délivrance du brevet: **08.05.2013**
(21) Numéro de dépôt: 07731952.3
(22) Date de dépôt: 26.04.2007
(51) Int. Cl.: H02K 15/02, H02K 1/22

(54) **PROCEDE DE REALISATION D'UN ROTOR COMPORTANT UNE ETAPE D'USINAGE DE GORGES DANS LES DENTS DES POLES ET ROTOR OBTENU PAR LE PROCEDE**
VERFAHREN ZUM HERSTELLEN EINES ROTORS MIT EINEM SCHRITT DES MASCHINENBEARBEITENS VON RILLEN IN DEN ZÄHNEN DER POLE UND DURCH DAS VERFAHREN ERHALTENER ROTOR
METHOD FOR PRODUCING A ROTOR COMPRISING A STEP OF MACHINING GROOVES IN THE TEETH OF THE POLES, AND ROTOR OBTAINED BY SAID METHOD

(30) Priorité: 16.05.2006 FR 0651769
(43) Date de publication de la demande: 28.01.2009
(73) Titulaire: VALEO EQUIPEMENTS ELECTRIQUES MOTEUR, 94046 Créteil Cedex (FR)
(72) Inventeur: BADEY, Jean-Philippe, 62630 Etaples sur Mer (FR); LENOIR, Romaric, 62176 Sainte Cecile (FR); TUNZINI, Marc, 78000 Versailles (FR); BILTERYST, Pierre-Yves, 62170 Brimeux (FR)
(74) Mandataire: Gamonal, Didier
(86) Numéro de dépôt international: PCT/FR2007/051179
(87) Numéro de publication internationale: WO 2007/132105

(56) Documents cités:
- EP-A2- 1 227 566
- FR-A1- 2 793 085
- JP-A- 5 056 616
- US-A1- 2004 178 696

## Description

### Domaine de l'invention

L'invention propose un procédé de réalisation d'un rotor à griffes de machine électrique tournante comportant un arbre central et deux roues polaires, chaque roue polaire s'étendant globalement radialement par rapport à l'axe principal de l'arbre central et comportant à sa périphérie externe une série de dents de forme globalement trapézoïdale, qui s'étendent axialement en direction de l'autre roue polaire, du type qui comporte :
- une étape de montage des roues polaires sur l'arbre de manière que chaque dent d'une roue soit située dans l'espace existant entre deux dents consécutives de l'autre roue ;
- une étape d'usinage des faces latérales en vis a vis de deux dents adjacentes appartenant chacune à une roue polaire, qui consiste à usiner dans chaque face latérale une gorge axiale, et
- une étape de montage d'un élément magnétique entre deux dents adjacentes, de manière que l'élément magnétique soit logé en partie dans les gorges axiales usinées dans les faces latérales en vis-à-vis des deux dents adjacentes.

Un tel procédé est décrit dans FR-A-2793085.

### Etat de la technique

Ce rotor à griffes, comporte également un noyau coaxial à l'arbre et intercalé entre les flasques que présentent les roues polaires. Un bobinage d'excitation est monté sur le noyau.

Dans un tel procédé de montage du rotor au cours duquel, après montage du bobinage d'excitation sur le noyau, les deux roues sont tout d'abord pressées à l'aide d'une presse de compactage l'une contre l'autre via le noyau de part et d'autre du bobinage d'excitation pour permettre un passage optimal de flux magnétique à travers le noyau, puis sont montées sur l'arbre central d'entraînement comportant pour ce faire au moins un tronçon d'entraînement non lisse.

Le positionnement angulaire d'une roue par rapport à l'autre est réalisé au moyen de doigts d'indexage interposés entre les deux roues polaires de manière temporaire pendant le l'opération de pressage ou compactage.

Ensuite, l'arbre est emmanché à force dans les alésages des roues polaires. Un tronçon d'entraînement de l'arbre, qui est reçu par exemple dans les alésages des roues, comporte des reliefs, par exemple un moletage sous la forme de cannelures ou de stries, pour solidariser en rotation l'arbre et les roues polaires.

Après que l'arbre ait été emmanché dans les alésages des roues polaires, les faces latérales en vis-à-vis des dents sont usinées, notamment par fraisage, pour obtenir les gorges axiales qui sont destinées à recevoir les éléments magnétiques.

Ces usinages permettent d'obtenir des cotes précises pour le montage des éléments magnétiques et évitent des décalages des gorges les unes par rapport aux autres.

Enfin, les éléments magnétiques, généralement des aimants permanents, sont montés dans les logements délimités par deux gorges axiales en vis-à-vis.

Lors de ces opérations d'usinage des faces latérales en vis-à-vis des dents et de la face périphérique extérieure des roues polaires, des copeaux chauds sont susceptibles d'être projetés sur le bobinage d'excitation qui risque ainsi d'être détérioré. Ces opérations d'usinage ne peuvent pas être réalisées à l'aide d'un lubrifiant qui risque aussi de détériorer le bobinage d'excitation et sont donc rendue plus longues et plus onéreuses.

Enfin, les dimensions de la fraise utilisée lors de l'étape d'usinage des faces latérales des dents sont limitées par les caractéristiques dimensionnelles des dents. En effet, le diamètre maximal de la queue de la fraise est déterminé en fonction de la distance entre les faces latérales en vis-à-vis de deux dents adjacentes, ce qui limite le diamètre de la tête de coupe de la fraise. La profondeur des gorges est donc elle aussi limitée.

### Objet de l'invention

Afin de résoudre ces problèmes, l'invention propose un procédé de réalisation du type décrit précédemment, caractérisé en ce que l'étape d'usinage des faces latérales des deux dents adjacentes est mise en oeuvre avant l'étape de montage des roues polaires sur l'arbre de manière directe ou indirecte, et consiste à usiner la gorge dans la face latérale d'une dent associée, notamment par fraisage, de manière que la gorge soit non débouchante au niveau d'au moins une extrémité axiale de la dent associée.

Grâce à l'invention cette étape d'usinage peut être réalisée avec enlèvement de matière et lubrification de l'outil, par exemple par fraisage, mais également sans enlèvement de matière par exemple par forgeage ou pressage.

Lors de cette étape le bobinage d'excitation n'est pas présent et ne risque donc pas d'être détérioré.

Selon d'autres caractéristiques, considérées isolément et/ou en combinaison, du procédé de réalisation :
- l'étape d'usinage consiste à usiner chaque face latérale d'une dent associée, notamment par fraisage, de manière que la gorge soit non débouchante au niveau de l'extrémité axiale externe de la dent associée, au niveau de laquelle la dent est reliée au bord d'extrémité radiale externe de la roue polaire associée ;
- l'étape d'usinage consiste à usiner la gorge dans la face latérale d'une dent associée, notamment par fraisage, de manière que la gorge soit non débouchante au niveau des deux extrémités axiales de la dent associée pour fragiliser le moins possible la dent et une meilleur retenue de l'élément magnétique ;
- l'étape de montage de l'élément magnétique comporte une première sous étape de montage de cet élément dans la gorge axiale réalisée dans la face latérale d'une première dent des deux dents adjacentes, et une deuxième sous étape de montage de l'élément magnétique dans la gorge axiale réalisée dans la face latérale de la deuxième dent adjacente ;
- la première sous étape de l'étape de montage de l'élément magnétique est mise en oeuvre antérieurement à l'étape de montage des roues polaires sur l'arbre de manière directe ou indirecte;
- la deuxième sous étape de l'étape de montage de l'élément magnétique est mise en oeuvre simultanément à l'étape de montage des roues polaires sur l'arbre de manière directe ou indirecte ;
- le procédé comporte une étape d'ajustement de la position axiale de chaque roue polaire par rapport à l'autre roue polaire, qui consiste à usiner une face d'extrémité axiale interne de chaque roue ;
- l'étape d'usinage de la face d'extrémité axiale interne est mise en oeuvre antérieurement à l'étape de montage des roues polaires sur l'arbre ;
- l'étape de montage des roues polaires sur l'arbre consiste à agencer axialement les roues polaires de part et d'autre d'un noyau, de manière que la face d'extrémité axiale interne de chaque roue polaire est en butée axialement contre une face d'extrémité axiale interne associée en vis-à-vis du noyau ;
- le procédé comporte dans un mode de réalisation une étape de montage de l'arbre dans au moins un manchon intermédiaire ;
- l'étape de montage de l'arbre dans le manchon est mise en oeuvre antérieurement à l'étape de montage des roues polaires sur le manchon intermédiaire ;
- l'étape de montage des roues polaires sur le manchon intermédiaire consiste à emmancher chaque roue polaire sur une portée cylindrique externe du manchon intermédiaire ;
- le procédé comporte une étape d'usinage du diamètre externe et interne de chaque roue polaire avant mise des roues polaires sur le manchon intermédiaire.

L'invention propose aussi un rotor à griffes de machine électrique tournante obtenu par un procédé selon l'une quelconque des revendications précédentes, qui comporte un arbre central, un noyau et deux roues polaires, dans lequel chaque roue polaire s'étend globalement radialement par rapport à l'axe principal de l'arbre central et comporte une série de dents de forme globalement trapézoïdale, qui s'étendent axialement en direction de l'autre roue polaire, de manière que chaque dent d'une roue polaire soit située dans l'espace existant entre deux dents consécutives de l'autre roue polaire, qui comporte au moins un élément magnétique agencé entre deux dents adjacentes appartenant chacune à l'une des deux roues polaires, et qui est reçu en partie dans une gorge réalisée dans chacune des faces latérales en vis-à-vis des dites dent adjacentes.

Ce rotor est caractérisé en ce que chaque gorge est non débouchante au niveau d'au moins une extrémité axiale de la dent associée.

Selon d'autres caractéristiques du rotor :
- chaque gorge est non débouchante au niveau de l'extrémité axiale externe de la dent, qui est reliée au bord d'extrémité radiale externe de la roue polaire associé ;
- chaque gorge est non débouchante au niveau des deux extrémités axiales de la dent associée ;
- chaque roue polaire comporte un alésage central pour son positionnement coaxialement à l'arbre via un manchon intermédiaire dans lequel l'arbre est emmanché et qui est emmanché dans l'alésage de chaque roue.

### Brève description des dessins

D'autres caractéristiques et avantages de l'invention apparaîtront à la lecture de la description détaillée qui suit pour la compréhension de laquelle on se reportera aux figures annexées parmi lesquelles :
- la figure 1 est une vue en coupe axiale d'un alternateur muni d'un rotor ;
- la figure 2 est une représentation schématique en perspective des roues polaires du rotor représenté à la figure 1, qui comporte des aimants montés entre les dents axiales conformément à l'invention;
- la figure 3 est une vue partielle avec arrachement et à plus grande échelle des roues polaires et des aimants représentés à la figure 2, suivant une direction globalement radiale;
- la figure 4 est une vue en section selon la ligne 4-4 des dents représentées à la figure 3 ;
- la figure 5 est une vue en coupe axiale d'un rotor doté d'un manchon intermédiaire ;
- la figure 6 est une vue analogue à la figure 5 dans laquelle les roues polaires sont solidarisées avec le manchon intermédiaire par sertissage ;
- la figure 7 est une vue analogue à la figure 5 dans laquelle les roues polaires sont solidarisées avec le manchon intermédiaire à moyeu central par soudage.

### Description d'exemples de réalisation de l'invention

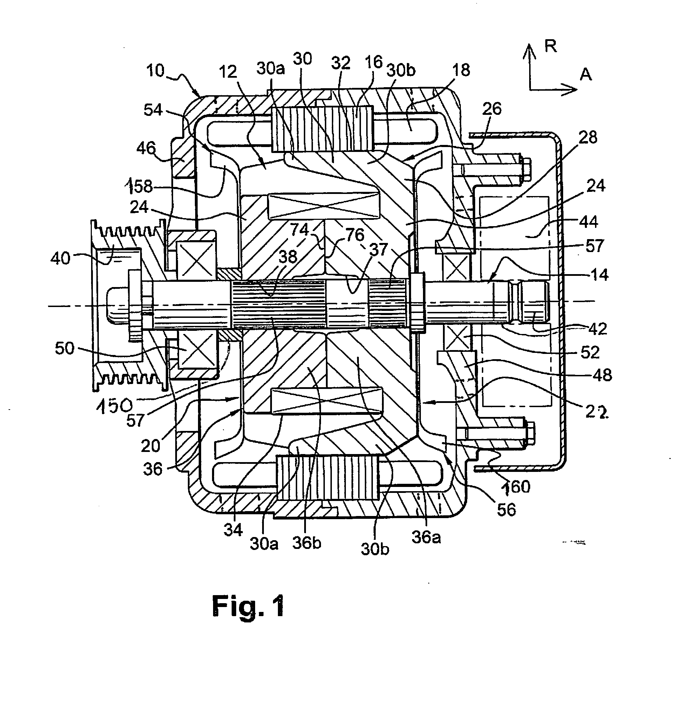

Dans la suite de la description, des éléments analogues, similaires ou identiques seront désignés par un même numéro de référence et on adoptera une orientation axiale et radiale indiquée par les flèches "A" et "R" de la figure 1.

Par ailleurs, les faces d'extrémité axiale orientées respectivement vers le milieu du rotor et dans le sens opposé seront qualifiées de faces internes et de faces externes.

A la figure 1, on a représenté une machine électrique tournante, sous la forme d'un alternateur polyphasé pour véhicule automobile à moteur thermique. En variante l'alternateur est réversible et consiste en un alterno-démarreur notamment pour démarrer le moteur thermique du véhicule comme décrit par exemple dans le document FR A 2 725 445.

Cette machine comporte un carter 10 et, à l'intérieur de celui-ci, un rotor à griffes 12 solidaire en rotation d'un arbre central 14 et un stator 16, 18 qui entoure le rotor 12 et qui comporte un corps 16 en forme d'un paquet de tôles doté d'encoches pour le montage d'un bobinage 18 de stator formant un chignon externe à chaque extrémité axiale du corps 16.

Ce bobinage 18 comporte au moins un enroulement par phase. Les sorties des enroulements sont reliées à au moins un pont redresseur (non représenté) comportant des éléments redresseurs tels que des diodes ou des transistors du type MOSFET, notamment lorsque la machine est réversible.

Les enroulements, montés dans les encoches du corps 16, sont obtenus par exemple à l'aide d'un fil continu, électriquement conducteur, revêtu d'une couche isolante ou en variante à l'aide de conducteurs en forme de barres, tel que des épingles, reliées entre elles par exemple par soudage.

Le ou les ponts redresseurs de l'alternateur polyphasé permettent de redresser le courant alternatif produit dans le bobinage 18 du stator en un courant continu notamment pour charger la batterie du véhicule automobile et alimenter les charges électriques du réseau de bord du véhicule.

Le rotor à griffes 12 comporte deux roues polaires 20, 22 axialement juxtaposées et présentant chacune un flasque radial 24 pourvu à sa périphérie externe de griffes 26.

Les roues polaires 20,22 sont obtenues par forgeage, matriçage ou à la presse avec pliage.

Chaque flasque 24 est de forme annulaire et s'étend radialement par rapport à l'axe principal de l'arbre central 14.

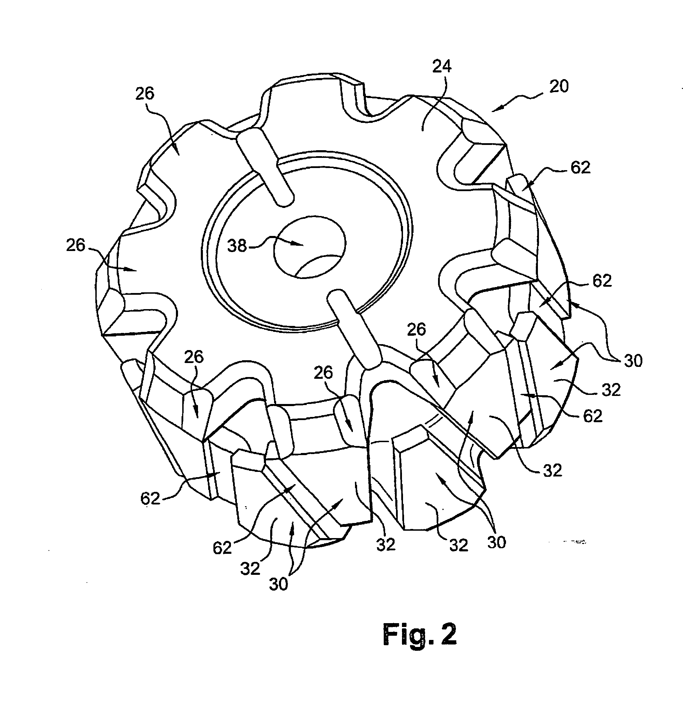

Chaque griffe 26 comporte (figures 1 et 2) un tronçon d'enracinement 28 d'orientation radiale dans le plan du flasque 24 concerné. Ce tronçon 28 est prolongé à sa périphérie extérieure par une dent 30 d'orientation globalement axiale.

Les griffes 26 d'une roue polaire s'étendent donc à la périphérie externe du flasque de cette roue et un entrefer annulaire existe entre la face périphérique extérieure 32 des dents 30 et la périphérie interne du corps 16 du stator.

Les dents 30 s'étendent donc à la périphérie externe des roues polaires et sont globalement de forme trapézoïdale. Les dents d'une roue polaire sont dirigées axialement vers le flasque de l'autre roue polaire, une dent d'une roue polaire pénétrant dans l'espace existant entre deux dents consécutives de l'autre roue polaire de sorte que les dents externes 30 sont imbriquées et que les roues polaires sont montées tête-bêche.

Un bobinage d'excitation 34 est implanté axialement entre les flasques 24 des roues 20, 22 et est porté par une partie 36 du rotor 12 en forme d'un noyau annulaire cylindrique coaxial à l'arbre 14. Ce noyau 36 comporte un alésage central 37 et est ici constitué de deux tronçons axialement distincts 36a, 36b dont chacun est réalisé venu de matière avec sa roue 20, 22 associée.

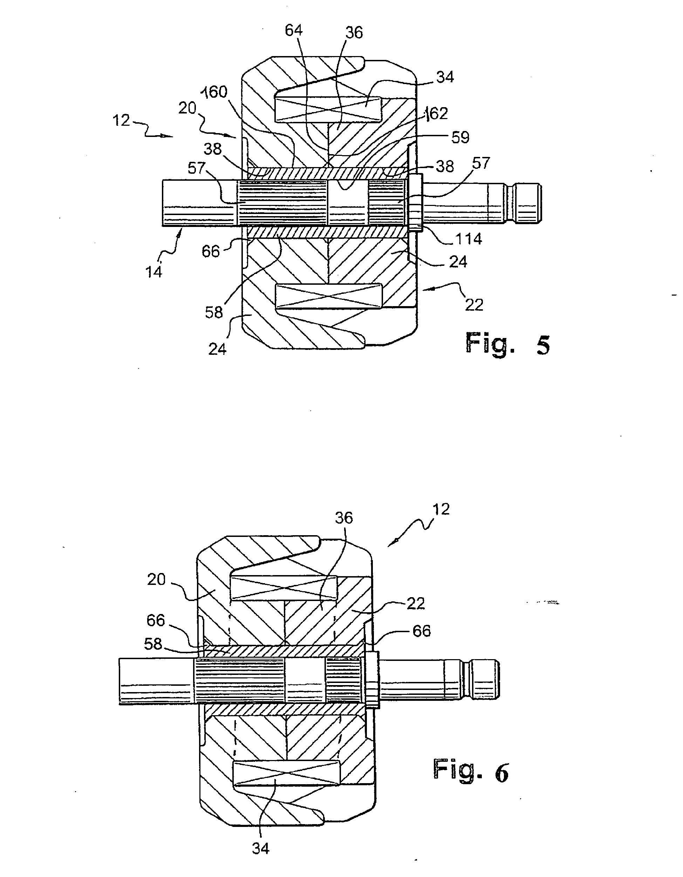

En variante représentée par des pointillés à la figure 6, le noyau central 36 à alésage 37 est réalisé en une seule pièce distincte des roues polaires 20, 22, qui sont agencées axialement de part et d'autre du noyau 36.

Dans tous les cas le bobinage 34 est monté axialement entre les flasques 24 et les tronçons d'enracinement 28 des roues 20, 22 en étant porté par le noyau 36. Ce bobinage 34, implanté dans l'espace délimité par les griffes 26 des roues 20, 22 et le noyau central 36, est mis en place avant montage des roues polaires sur l'arbre 14 du rotor 12.

Dans la suite de la description, le terme "bobinage" sans qualificatif sera compris comme le bobinage d'excitation 34 et non pas comme le bobinage18 du stator 16, 18.

Les roues polaires 20, 22 et le noyau 36 sont de préférence en matière ferromagnétique et sont traversées de manière coaxiale par l'arbre 14. A cet effet, chaque roue 20, 22 comporte un alésage central 38, qui traverse axialement le flasque 24 et prolonge l'alésage 37 du noyau 36.

Le fil du bobinage d'excitation 34 est dans un mode de réalisation bobiné sur un support annulaire en matière électriquement isolante (non représenté) monté, de préférence à force, sur la périphérie extérieure du noyau 36. Ce support est par exemple de section axiale globalement en forme de U pour isoler le bobinage 34 des flasques 24 des roues 20, 22.

Selon une variante non représentée le noyau 36 est en une partie et le fil du bobinage 34 est bobiné sur un isolant fixé sur le noyau 36 et est conformé pour éviter tout contact avec les flasques 24 et les dents 30 des roues polaires 20, 22.

Lorsque le bobinage 34 est alimenté électriquement les roues polaires 20, 22 et le noyau 36 sont magnétisés et le rotor 12 devient un rotor inducteur avec formation des pôles magnétiques au niveau des griffes 26, l'une des roues portant alors des pôles Nord et l'autre des pôles Sud.

Ce rotor inducteur 12 crée un courant induit alternatif dans le stator 16,18 alors induit lorsque l'arbre 14 du rotor 12 tourne.

L'arbre 14 porte à son extrémité axiale avant un organe d'entraînement, tel qu'une poulie 40 (figure 1) ou en variante un engrenage, appartenant à un dispositif de transmission de mouvements par l'intermédiaire d'au moins une courroie ou une chaîne ou un engrenage (non représentés) entre l'alternateur et le moteur thermique du véhicule automobile.

Cet arbre 14 porte à son extrémité axiale arrière de diamètre réduit des bagues collectrices 42 reliées par des liaisons filaires aux extrémités du bobinage d'excitation 34.

Des balais, appartenant à un porte-balais 44, sont disposés de façon à frotter sur les bagues collectrices 42, afin d'alimenter le bobinage 34 en courant électrique. Le porte-balais 44 est relié à un régulateur de tension (non représenté).

Le carter 10 est réalisé à la figure 1 en deux parties, à savoir un palier avant 46 adjacent à la poulie 40 et un palier arrière 48 portant le porte-balais 44 et le plus souvent le ou les ponts redresseurs et le régulateur de tension. Les paliers 46, 48 sont de forme creuse et chacun porte un roulement à billes 50, 52, respectivement, pour le montage à rotation de l'arbre 14.

L'alternateur 10 est doté de moyens de refroidissement.

Ainsi à la figure 1, les paliers 46, 48 sont ajourés pour refroidissement de l'alternateur par circulation d'air et le rotor 12 porte au moins à l'une de ses extrémités axiales un ventilateur 54, 56 destiné à assurer cette circulation de l'air. A la figure 1 un premier ventilateur 54 est fixé sur la face frontale avant du rotor 12 et un deuxième ventilateur 56, plus puissant, sur la face dorsale arrière. Chaque ventilateur est pourvu d'une pluralité de pales 158, 160.

En variante non représentée, l'alternateur est refroidi par un fluide caloporteur, le carter 10 étant alors configuré pour comporter un canal de circulation approprié du fluide caloporteur.

Bien entendu le carter 10 peut comporter plus de deux parties, une partie intermédiaire portant le corps du stator étant par exemple intercalée entre les paliers 46, 48. Cette partie intermédiaire peut être refroidie par un fluide caloporteur.

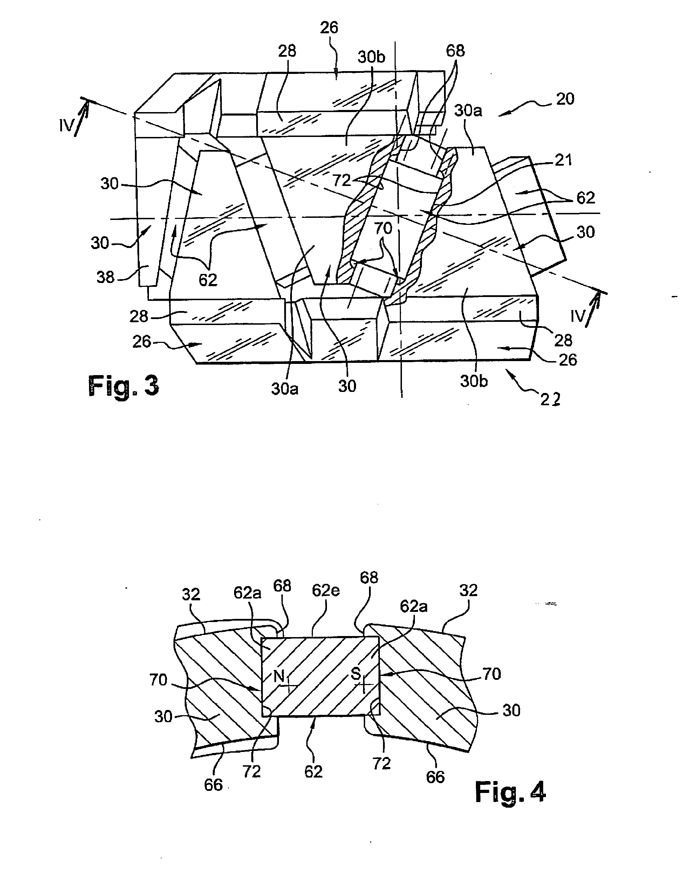

Chaque dent 30 comporte (figure 4) une face axiale extérieure 32, une face axiale intérieure 66 et deux faces latérales planes 68 formant deux des cotés du trapèze, et reliant les faces axiales intérieure 66 et extérieure 32. Les faces 32, 66 sont globalement planes.

Chaque face latérale 68 d'une première dent 30 d'une première roue polaire 20 s'étend parallèlement et à distance de la face latérale 68 en vis-à-vis d'une deuxième dent 30 adjacente à la première dent 30, et appartenant à l'autre roue polaire 22.

Par la suite, deux dents 30 montées tête bêche, dont chacune appartient à l'une des deux roues 20, 22 et possédant une face latérale 68 en vis-à-vis de la face latérale 68 de l'autre dent 30, seront désignées comme étant deux dents 30 adjacentes.

A la figure 2 le rotor 12 comporte huit dents 30 par roue polaire et donc huit paires de pôles. Il est prévu quarante-huit encoches dans le corps du stator dans le cas d'un alternateur triphasé, ou quatre-vingt-seize encoches dans le cas d'un alternateur à deux enroulements triphasés par phase et deux ponts redresseurs. Bien entendu le rotor 12 peut, selon les applications, comporter un nombre différent de paires de pôles. Par exemple chaque roue polaire peut comporter en variante six ou sept dents.

Dans les figures 2 à 4 le rotor 12 comporte des éléments magnétiques 62, sous la forme d'aimants permanents 62, interposés entre deux dents 30 adjacentes. Ces éléments 62 réduisent les fuites de flux magnétique au niveau de l'espace entre deux dents 30 adjacentes et contribuent à renforcer le flux magnétique et à augmenter les performances de la machine.

Selon un mode de réalisation le nombre de ces aimants 62 est déterminé de façon qu'il soit inférieur au nombre de paire de pôles du rotor 12 et que leur disposition soit symétrique par rapport à l'axe du rotor 12. Il est par exemple prévu quatre ou six paires d'aimants 62 pour huit paires de pôles ce qui permet un refroidissement de la machine à la faveur des espaces libres- non occupés par les aimants 62- entre les dents 30.

En variante le nombre de ces aimants est déterminé pour qu'il soit égale au nombre de paires de pôles du rotor, par exemple au nombre de huit pour huit paires de pôles.

Dans la description qui va suivre, on fera référence à deux dents 30 adjacentes et à l'aimant 62 associé. De plus dans les figures 3 et 4, on adoptera à titre non limitatif les orientations verticale, longitudinale et transversale pour lesquelles l'orientation longitudinale correspond à l'axe principal de l'aimant 62, l'orientation transversale correspond à la normale à la face latérale 68 des deux dents 30 adjacentes et l'orientation verticale à l'orientation radiale R.

Les dents 30 et les aimants 62 associés étant identiques, il sera compris que cette description s'applique de manière identique aux autres dents 30 et aimants 62

Les faces latérales 68 en vis-à-vis des deux dents 30 périphériques, globalement de forme trapézoïdale comme visible à la figure 3, comportent chacune une gorge 70, ou rainure, qui s'étend suivant la direction longitudinale de la face latérale 68 et dans laquelle l'aimant 62 est logé en partie.

Chaque gorge 70 est d'orientation principale longitudinale et s'étend globalement entre les deux extrémités axiales 30a, 30b de la dent 30 associée. La section de la gorge 70 suivant un plan vertical transversal est en forme de "U" ouvert transversalement vers l'autre gorge 70.

L'aimant 62 comporte deux tronçons d'extrémité transversale 62a dont chacun est logé dans une gorge associée 70. La section transversale de l'aimant est rectangulaire, de manière que chaque tronçon d'extrémité transversale 62a de l'aimant soit reçu sans jeu dans la gorge associée 70.

On appréciera que l'aimant 62, ici de forme globalement parallélépipédique, est bien maintenu et ne peut s'échapper sous l'action de la force centrifuge du fait de la configuration de ses gorges associées 70 en forme de U, qui sont délimitées par un bord supérieur constituant l'une des branches du U.

Les aimants 62 sont dans un mode de réalisation montés à faible jeu de montage dans les gorges 70.

Suivant une variante de réalisation, par exemple décrite dans le brevet français FR-2.784.248, le rotor 12 comporte une lame ou plaquette qui recouvre la face extérieure 62e de l'aimant et qui est interposée entre l'aimant et le bord transversal supérieur de chaque gorge 70.

Cet élément magnétique 62 peut être en deux parties reliées et comporter ainsi deux aimants reliés l'un à l'autre par une couche de matériau plus souple comme visible par exemple à la figure 4 de ce document FR-2.784.248.

Le procédé de réalisation du rotor 12 comporte une étape de montage des roues polaires 20,22 sur l'arbre 14, qui consiste à emmancher l'arbre 14 dans l'alésage 37, 38 du noyau 36 et de chaque roue polaire 20, 22.

Cet emmanchement est réalisé de manière directe à la figure 1 ou de manière indirecte via au moins un manchon 58, 158 dans les figures 5 à 7

A cet effet, l'arbre 14 comporte au moins un tronçon d'entraînement 57 associé à chaque roue polaire 20,22 et qui est reçu dans l'alésage 38 de la roue polaire 20, 22 associée.

Dans les modes de réalisation décrits (figues 1 et 5 à 7) il est prévu deux tronçons 57 de longueur différente. En variante il est prévu un unique tronçon 57 commun aux deux roues.

Ce ou ces tronçons 57 sont de section radiale non lisse. Le ou les tronçons 57 sont dotés de reliefs consistant ici en un moletage à stries moletés.

Ces stries dans le mode de réalisation de la figure 1, sont emmanchés à force dans les alésages 37, 38 pour la fixation et l'entraînement des roues polaires 20, 22 et du noyau 36 avec l'arbre 14, qui est ainsi solidaire en rotation des roues 20, 22.

Dans ces figures 5 à 7, l'arbre 14 avec ses tronçons 57 est emmanché à force dans les alésages internes du ou des manchons 58, 158 pour fixation et entraînement du ou des manchons et les roues polaires sont montées sur la périphérie externe du ou des manchons puis fixées au ou aux manchons de manière décrite ci-après.
Le procédé de réalisation du rotor 12 comporte aussi une étape d'usinage des faces latérales 68 des dents 30, pour réaliser les gorges 70, et une étape de montage des aimants 62 dans les gorges 70 associées.
Conformément à l'invention, l'étape d'usinage des faces latérales 68 des dents 30 est mise en oeuvre avant l'étape de montage des roues polaires 20 sur l'arbre 14 de manière directe (figure 1) ou de manière indirecte (figures 5 à 7).

Ainsi, le processus d'usinage des gorges 70, par exemple à l'aide d'une fraise, n'est pas limité par l'espace étroit existant entre les faces latérales 68 en vis-à-vis des deux dents adjacentes 30.

En effet suivant une caractéristique, lors de la mise en oeuvre de l'étape d'usinage, les roues polaires 20, 22 ne sont pas montées sur l'arbre 14, chaque face latérale 68 d'une dent 30 est donc usinée séparément de la face latérale 68 en vis-à-vis de l'autre dent 30. L'espace devant chaque face latérale 68 est dégagé, il est donc possible d'utiliser un outil mettant en oeuvre l'étape d'usinage, dont les dimensions ne sont pas limitées.

De plus, puisque l'espace devant la face latérale 68 à usiner est dégagé, l'accostage et/ou le dégagement de l'outil peut se faire transversalement, c'est-à-dire perpendiculairement à la face latérale 68. Les copeaux ne risquent pas d'endommager le bobinage 34 non monté sur le noyau du rotor à ce stade. La profondeur de la gorge 70 et l'outil d'usinage de la gorge peuvent avoir la dimension requise puisque l'on n'est pas gêné par la dent adjacente. On peut lubrifier également l'outil puisque le bobinage 34 n'est pas présent à ce stade.

Selon un autre aspect de l'invention, l'étape d'usinage consiste à usiner chaque face latérale 68 de manière que la gorge 70 obtenue soit non débouchante au niveau d'au moins une de ses extrémités longitudinales, comme on peut le voir à la figure 3.

Selon un premier mode de réalisation du procédé conforme à l'invention, l'étape d'usinage consiste à usiner la face latérale 68 de manière que la gorge 70 soit non débouchante au niveau de l'extrémité axiale externe 30b de la dent 30 associée la plus proche du flasque de la roue polaire concernée.

Ainsi, il n'y a aucun enlèvement de matière au niveau de l'extrémité axiale externe 30b de la dent 30, par laquelle la dent 30 est reliée au tronçon d'enracinement 28 de la griffe 26. Ainsi, la dent 30 n'est pas fragilisée et la griffe 26 est plus rigidité.

Ainsi dans un mode de réalisation chaque dent adjacente 30 présente une gorge 70 non débouchante au niveau de son extrémité 30b.

Selon un second mode de réalisation (figure 3), l'étape d'usinage consiste à usiner la face latérale 68 de manière que la gorge 70 soit non débouchante au niveau de l'extrémité axiale externe 30b et au niveau de l'extrémité axiale interne 30a de la dent 30 la plus proche de l'extrémité libre de la dent 30.

Ainsi, il n'y a aucun enlèvement de matière au niveau de des extrémités 30a, 30b de la dent 30 et cette dent 30 est encore moins fragilisée, ce qui améliore encore la rigidité de la griffe 26.

Ainsi dans un mode de réalisation chaque dent adjacente 30 présente une gorge 70 non débouchante au niveau de ses extrémité 30b. 30a.

Bien entendu la longueur de la gorge 70 dépend de la longueur de l'aimant, qui peut avoir la longueur souhaitée.

En variante il y a qu'un certain nombre de dents qui présentent une gorge non débouchante au niveau d'une des extrémités 30a, 30b et les autres au niveau de l'autre des extrémités 30b, 30a.

Dans tous les cas il est formé à la faveur des gorges 70 des logements permettant une meilleure retenue des aimants 62, qui ne peuvent pas s'échapper, notamment grâce aux extrémités 30a, 30b.

On appréciera que l'usinage est en variante réalisé sans enlèvement de matière, par exemple par forgeage.

Conformément à un autre aspect du procédé selon l'invention, l'étape de montage de l'aimant 62 dans la gorge 70 associée de chaque dent 30 est mise en oeuvre, au moins en partie, avant l'étape de montage des roues polaires 20, 22 sur l'arbre 14 de manière directe ou indirecte

En effet, puisque l'espace devant la face latérale 68 est dégagé lorsque les deux roues polaires 20 sont séparées l'une de l'autre, il est plus aisé de loger transversalement les tronçons d'extrémité transversale 62a de l'aimant 62 dans les gorges 70 associées que lorsque les deux roues polaires 20 sont en position montées sur l'arbre 14.

De plus, lorsque chaque gorge 70 est non débouchante au niveau de l'extrémité axiale externe 30b et/ou au niveau de l'extrémité axiale interne 30a de la dent 30 associée, il n'est pas possible d'introduire les tronçons d'extrémité transversale 62a de l'aimant 62 dans les gorges 70 associées.

L'étape de montage de l'aimant 62 comporte ainsi une première sous étape de montage de l'aimant 62, au cours de laquelle un tronçon d'extrémité transversale 62a de l'aimant 62 est logé dans la gorge 70 associée de l'une des deux dents 30, et elle comporte une deuxième sous étape de montage de l'aimant 62 au cours de laquelle l'autre tronçon d'extrémité transversale 62a de l'aimant 62 est logé dans la gorge 70 associée de l'autre dent 30.

La deuxième sous étape est réalisée en rapprochant axialement la deuxième roue polaire de la première roue polaire dans laquelle est déjà monté l'aimant lors de la première sous étape.

Ainsi on tire partie de la forme globalement trapézoïdale des dents permettant lors du mouvement axial de la deuxième roue par rapport à la première roue un montage de l'aimant dans la gorge de la deuxième roue.

Selon un mode de réalisation de l'étape de montage de l'aimant 62, la première sous étape de montage de l'aimant 62 est mise en oeuvre avant l'étape de montage des roues polaires 20, 22 sur l'arbre 14, et la deuxième sous étape de montage de l'aimant 62 est mise en oeuvre simultanément à l'étape de montage des roues polaires 20, 22 sur l'arbre 14, lorsque les roues 20,22 sont pressées axialement l'une contre l'autre.

Pendant la période de temps entre la première sous étape de montage de l'aimant 62 et la deuxième sous étape de montage de l'aimant 62, l'aimant 62 est maintenu en position montée dans la gorge 70 associée par l'utilisation de moyens de solidarisation temporaires ou permanents, par exemple en utilisant une colle du type de celle utilisée dans le brevet français FR-2.784.248.

Comme on l'a dit précédemment, et comme on l'a représenté aux figures 3 et 4, l'aimant 62 est logé à faible jeu de montage dans les gorges 70.

Or, selon l'art antérieur, les deux gorges 70 sont usinées simultanément, et par un outil unique, ce qui permet d'obtenir un positionnement correct des gorges 70 l'une en face de l'autre et il est donc aisé de limiter les jeux entre l'aimant 62 et le fond 72 de chaque gorge.

Cependant, selon le procédé de réalisation conforme à l'invention, les deux gorges 70 sont réalisées lors de deux opérations distinctes l'une de l'autre, et avant le montage des roues polaires 20, 22 sur l'arbre 14.

Le procédé selon l'invention comporte donc une étape d'ajustement de la position axiale de chaque roue polaire 20, 22 l'une par rapport à l'autre.

Combiné au positionnement angulaire des deux roues polaires 20, 22 l'une par rapport à l'autre, le positionnement axial des roues polaires 20, 22 l'une par rapport à l'autre permet de maîtriser la distance transversale entre les fonds 72 des deux gorges 70, permettant ainsi de réduire le jeu transversal de l'aimant 62 dans les dents.

Cette étape d'ajustement est mise en oeuvre avant l'étape de montage des roues polaires 20, 22 sur l'arbre 14, et elle consiste à usiner au moins une face d'extrémité axiale interne, de chaque roue 20, 22 par laquelle la roue 20, 22 est en butée axiale contre une face d'extrémité axiale en vis-à-vis du noyau.

Selon le mode de réalisation représenté dans les figures 1 et 5, pour lequel le noyau est constitué de deux tronçons 36a, 36b, dont chacun est réalisé venu de matière avec une roue polaire 20, 22 associée, l'étape d'ajustement consiste à usiner les faces d'extrémités axiales internes en vis-à-vis respectivement 74, 76 et 162, 164 des deux tronçons 36a, 36b du noyau 36.

Ces faces 74, 76 - 162, 164 sont ici d'orientation radiale.

Lors du montage des roues polaires 20,22 sur l'arbre 14, les faces internes 74, 76- 162, 164 de chaque moitié de noyau 36 sont en butée axiale l'une contre l'autre permettant ainsi le positionnement axial des roues 20, 22 l'une par rapport à l'autre.

Bien entendu cette venue en butée est réalisée postérieurement après la mise en place du bobinage 34.

Ensuite ces faces d'extrémité axiale sont pressées l'une contre l'autre à l'aide d'une presse de compactage pour permettre un passage optimal du flux magnétique à travers le noyau.

Cette presse présente des doigts d'indexage implantés dans les flasques, plus précisément dans les espaces libres entre les griffes 26 (voir figure 2).

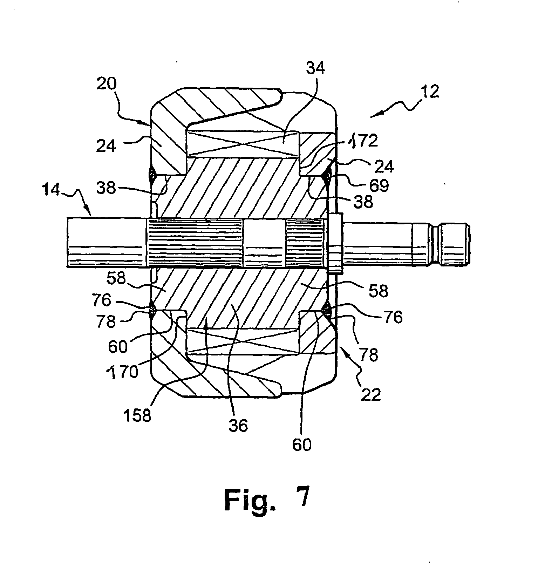

Selon un autre mode de réalisation (figure 7) des roues 20,22 et du noyau 36, le noyau 36 forme une pièce unique qui est distincte des roues polaires 20.

Le noyau 36 comporte deux faces externes d'extrémité axiale 170, 172 contre chacune desquelles la face interne du flasque 24 de chaque roue polaire 20, 22 est appuyée. Ces faces externes sont ici d'orientation radiale.

Dans cette variante, le positionnement axial d'une roue polaire 20 par rapport à l'autre est réalisé par la face interne de chaque flasque 24 qui est en butée axialement contre une face externe 170, 172 en vis-à-vis du noyau 36.

Selon cet autre mode de réalisation, l'étape d'ajustement consiste à usiner les deux faces externes du noyau 36 et la face interne en vis-à-vis du flasque 24 de chaque roue 20, 22.

L'arbre 14 est réalisé dans un matériau plus dur que celui des roues 20 et du noyau 36, en sorte que les tronçons d'entraînement 57 de l'arbre 14 taillent des sillons dans les alésages 38 des roues polaires 20 et dans le noyau 36 lors de l'étape de montage, provoquant ainsi une déformation plastique de l'alésage 38 de la roue 20, 22 selon une direction radiale de manière inhomogène. Cette déformation plastique ne permet pas d'obtenir une concentricité suffisamment précise des roues polaires 20 par rapport à l'axe de rotation de l'arbre 14, et les gorges 70 associées à l'aimant peuvent alors être décalées radialement l'une par rapport à l'autre.

En outre, la force nécessaire pour presser axialement les roues l'une contre l'autre ne permet pas d'obtenir un positionnement axial précis des roues l'une par rapport à l'autre.

Par ailleurs, les stries du tronçon d'entraînement de l'arbre ne sont jamais orientées de façon parfaitement rectiligne selon une direction axiale, mais elles sont généralement de forme hélicoïdale autour de l'arbre ce qui constitue un défaut.

Ainsi, lors de l'emmanchement du tronçon d'entraînement de l'arbre dans les roues polaires pressées l'une contre l'autre, la forme hélicoïdale des stries provoque l'apparition d'une contrainte de torsion entre l'alésage de chaque roue et l'arbre, ce qui est susceptible de provoquer un mouvement relatif de rotation des deux roues polaires l'une par rapport à l'autre lorsque la contrainte axiale est relâchée.

Pour limiter de tels problèmes selon un autre aspect le procédé de réalisation du rotor 12 l'étape de montage des roues polaires sur l'arbre est réalisée de manière indirecte.

Ainsi ce procédé de réalisation du rotor 12 comporte dans un mode de réalisation une étape de montage de l'arbre 14 dans au moins un manchon intermédiaire 58, 158 de forme tubulaire (figures 5 et 6) ou étagée (figure 7), Le manchon est réalisé dans le même matériau que les roues polaires 20,22 et le noyau 36.

Cette étape de montage, ici à force, de l'arbre dans le manchon conduit à une déformation plastique du manchon.

Pour cette raison cette étape de montage est dans un mode de réalisation mise en oeuvre avant une étape de montage des roues 20, 22 sur le manchon et comporte en outre une sous étape d'usinage d'au moins une portée cylindrique extérieure du manchon 58, 158, de manière que la portée cylindrique soit coaxiale à l'axe principal de l'arbre 14 afin de compenser les conséquences de la déformation plastique du manchon.

Cette portée est lisse et permet donc un mouvement aisé de translation et de rotation relatif entre les roues polaires et le manchon 58,158.

Ce manchon intermédiaire 58, 158 comporte donc une ou des parties lisses externes sur lesquelles se montent ultérieurement en contact intime la périphérie interne des roues 20, 22 de manière que le manchon soit interposé radialement entre chaque tronçon d'entraînement moleté 57 de l'arbre 14 et l'alésage 38, 37 associé de chaque roue polaire 20, 22.

Le procédé comporte donc également dans ce cas une étape d'usinage des diamètres des roues polaires avant l'étape de montage de l'arbre 14.

Lors de cette étape d'usinage on usine le diamètre extérieur et le diamètre intérieur de chaque roue polaire pour notamment que l'alésage interne 38, 37 vienne en contact intime avec la ou les portées extérieures du manchon intermédiaire 58, 158.

Cela est réalisé avant la mise en place du bobinage 34.

De ce fait, lors de l'étape de montage des roues polaires 20, 22 sur l'arbre 14, les roues sont montées sur la portée cylindrique, qui est elle même coaxiale à l'arbre 14. De plus, l'étape de montage des roues polaires 20, 22 sur l'arbre 14 s'effectue sans déformation des roues 20, 22 ou du manchon, ce qui permet d'assurer la coaxialité des roues polaires 20, 22 par rapport à l'arbre 14, et donc que les gorges 70 sont situées à la même cote radiale l'une par rapport à l'autre.

Ainsi on peut usiner par avance le diamètre extérieur et intérieur de chaque roue polaire à l'aide d'un outil que l'on lubrifie sans risquer d'endommager le bobinage 34, tout en augmentant la durée de vie de l'outil.

Cette opération d'usinage est réalisée au choix avant ou après la formation des gorges 70.

Cette opération est avantageusement réalisée avant ou même temps que l'étape d'ajustement précitée suivie d'une étape de montage du bobinage 34 sur le noyau du rotor.

Dans les figures 5 et 6 le manchon intermédiaire 58 est de forme tubulaire à alésage interne 59 et il est prévu de manière précitée un noyau 36 en deux tronçons à faces internes 162, 164. Dans un mode de réalisation l'une au moins de ces faces est dotée d'un chanfrein pour faciliter le montage sur le manchon 58.

Le positionnement axial des roues 20, 22 est donc réalisé par les faces 162, 164 en vis-à-vis de chaque tronçon de moyeu 36 et l'alésage 38 est rallongé pour englober l'alésage 37 de la figure 1 sorte que la périphérie interne de chaque roue 20, 22 est en contact intime avec la périphérie externe du manchon 58.

Dans cette figure l'arbre 14 présente à l'arrière un épaulement en forme de collerette 114 (non référencé à la figure 1). L'extrémité arrière du manchon 58 est appui sur cette collerette 114 après montage de l'arbre 14, cette collerette 114 limitant le mouvement de l'arbre 14 par rapport au manchon 58.

L'extrémité avant du manchon 58 est destinée à venir en appui sur l'entretoise tubulaire 150 de la figure 1 interposée axialement entre la manchon 58 et le roulement 50. Cette entretoise 150 est traversée par l'arbre 14. Le manchon 58 est donc destiné à être monté entre la collerette 114 et l'entretoise 150 en sorte qu'il permet de diminuer les contraintes dans les roues polaires 20, 22.

Ce manchon est une pièce unique à la figure 5. En variante il est fractionné en une pluralité de manchons montés bout à bout.

Le manchon 58 est de manière non limitative dans la même matière ferromagnétique que les roues 20, 22 et le noyau 36.

Bien entendu dans les figures 5 à 7 le rotor 12 comporte des moyens pour solidariser en rotation les roues polaires 20, 22 avec le manchon intermédiaire 58, 158, qui est lui-même solidaire en rotation avec ici des tronçons d'entraînement 57 de l'arbre 14 emmanchés à force dans l'alésage interne du manchon 58, 158. Dans les figures 5 et 6 au moins un arc de l'arête circulaire externe de l'alésage central 38 de chaque roue polaire 20 comporte un chanfrein 66 (figures 5 et 6). Le chanfrein est apte à recevoir par sertissage une partie de matière déformée du manchon 58 (figure 6). Ce chanfrein 66 débouche au niveau de la face externe d'extrémité axiale du flasque 24 concerné opposée respectivement à la face 162 et à la face 164.

A cet effet, le manchon est avantageusement réalisé dans une matière ferromagnétique ductile tel que le fer doux qui est particulièrement adapté au sertissage.

De plus, chaque chanfrein 66 est délimité angulairement par deux faces radiales d'extrémité qui permettent de bloquer en rotation autour de l'arbre 14 les roues polaires 20, 22 par rapport au manchon. Il est donc préféré pour solidariser chaque roue polaire 20, 22 et le manchon en rotation, que le chanfrein 66 ne s'étende que sur un arc du pourtour de l'alésage central 38 de chaque roue polaire 20, 22 et non pas sur tout le pourtour de l'alésage 38 pour que la matière déformée par sertissage du manchon pénètre dans cet arc.

En variante il existe au moins deux paires de faces radiales et deux arcs remplis par la matière du manchon 58.

Le sertissage permet aussi de bloquer axialement les roues polaires 20, 24 par rapport au manchon.

Selon une variante non représentée le chanfrein est remplacé ou complété par des encoches.

Selon une variante non représentée le chanfrein est porté par une arête externe de chaque extrémité axiale de la portée du manchon 58, et chaque roue 20, 22 est sertie dans le chanfrein.

Selon encore une autre variante non représentée, chaque roue 20, 22 est fixée au manchon par soudage. Ainsi, une soudure, de préférence continue, est réalisée entre le pourtour de l'arête externe de l'alésage 38 et le manchon 58.

A la figure 7 le manchon 158 est étagé en diamètre en étant monobloc avec le noyau 36 distinct des roues 20, 22. Ce noyau est implanté axialement entre les flasques 24 des roues polaires 20, 22.

Ce manchon 158 comporte deux manchons externes tubulaires 58.

Chaque manchon 58 présente à sa périphérie externe une portée cylindrique 60 usinée de manière que cette portée soit concentrique à l'axe de rotation de l'arbre 14. Cette portée 60 est destinée à venir en contact intime avec la périphérie interne du flasque 24 de la roue polaire concernée pour centrage de celle-ci.

Ces manchons tubulaires 58 sont disposés de part et d'autre du noyau 36 de plus grande dimension radiale, ici de plus grand diamètre, en sorte qu'il y a présence d'épaulements 170, 172 aux extrémités axiales du noyau 36 permettant un appui axial du flasque 24 respectivement de la roue polaire 20 et de la roue polaire 22. Les épaulements 170, 172 remplacent les faces 162, 164 de la figure 5. Le manchon 158 présente donc un noyau 36 saillant radialement par rapport aux manchons 58.

Deux chanfreins 176, 178 sont réalisés en correspondance dans la face radiale externe du manchon 58 et du flasque 24 de la roue polaire concernée. Chaque roue polaire est ainsi fixée par soudage 69 à la faveur des chanfreins 176, 178.

En variante la fixation est réalisée par sertissage comme à la figure 6.

Dans ce mode de réalisation les flasques 24 peuvent être de hauteur réduite et les manchons 58 de plus grand diamètre.

Le manchon 158 peut être standard et servir au montage de roues polaires de diamètre externe différent.

Pour les besoins de la description, le rotor 12 a été décrit ici agencé dans un alternateur. Cependant, le rotor 12 n'est pas limité à cette application.

La périphérie externe du noyau 36 est cylindrique dans les formes de réalisation représentées. En variante elle est d'une autre forme par exemple de forme rectangulaire ou polygonale.

Dans un rotor réalisé selon le mode de réalisation de la figure 1, la force qui est nécessaire pour monter les roues polaires directement sur le tronçon d'entraînement de l'arbre est très élevée. En conséquence, la distance axiale entre les deux roues polaires est moins maîtrisée que dans les figures 5 à 7 et il faut prévoir un intervalle de tolérance large.

Grâce aux enseignements des figures 5 à 7, la force suffisante pour monter les roues polaires 20, 22 sur leur manchon intermédiaire 58, 158 extérieurement lisses est suffisamment diminuée pour réduire sensiblement cet intervalle de tolérance.

Dans le rotor de la figure 1, il est nécessaire de prévoir un jeu plus important entre chaque extrémité axiale du bobinage et le flasque de chaque roue polaire. Le rotor 12 réalisé selon les enseignements des figures 5 à 7 permet d'obtenir un positionnement axial plus précis des roues polaires 20, 22 l'une par rapport à l'autre. Il est donc possible d'implanter un bobinage 34 plus long entre les deux roues polaires 20, 22 ce qui permet d'augmenter la puissance de l'alternateur.

Avantageusement, la précision de la distance axiale entre les deux roues 20, 22 d'un rotor 12 des figures 5 à 7 est améliorée par rapport à celle d'un rotor selon la figure 1. Il est ainsi possible de prévoir un bobinage 34 qui occupe au mieux l'espace entre la périphérie externe du noyau 36 et les griffes 26,, notamment dans le cadre du mode de réalisation de la figure 7.

On peut également mieux ajuster la longueur axiale du corps du stator par rapport à la longueur axiale entre les deux roues polaire.

De même, la distance axiale entre les deux roues polaires 20, 22 étant mieux maîtrisée, un rotor 12 selon les enseignements des figures 5 à 7 permet d'agencer aux deux extrémités du rotor 12 des ventilateurs plus puissant sans augmenter l'encombrement axial de l'alternateur. Ainsi le ventilateur arrière 56 de la figure 1 est en variante un dispositif de ventilation comportant deux ventilateurs superposés comme d écrit par exemple dans le document WO 2004/106748 auquel on se reportera.

Un autre avantage est qu'il est aussi possible de diminuer l'encombrement axial de l'alternateur.

On peut mieux contrôler le rapport entre le diamètre externe du noyau et le diamètre externe du rotor.

D'une manière générale on maîtrise mieux la puissance de l'alternateur et on diminue les pertes de celle-ci.

Grâce à l'invention on peut ne pas modifier l'arbre 14 du rotor 12 et donc utiliser un arbre 14 du type standard, qui est ménagé dans les figures 5 à 7. Plus précisément l'arbre 14 présente un diamètre réduit au niveau des bagues 42. Grâce au manchon intermédiaire l'effort exercé sur la partie arrière de l'arbre 14 pour emmancher, par exemple à la presse, celui-ci dans le manchon 58, 158 est réduit.

Il sera aussi compris que des inversions mécaniques simples peuvent constituer des variantes de réalisation de l'invention. Par exemple, le rotor 12 comporte une pluralité de manchons, par exemple un nombre de deux manchons, qui sont agencés bout à bout autour de l'arbre 14 et dont chacun est associé à l'une des deux roues polaires 20.

Grâce à l'invention on ne risque pas d'endommager le bobinage 34 et on retient bien les aimants 62.

Grâce à l'invention on peut ajuster de manière appropriée la longueur des aimants et monter un nombre voulu d'aimants pour ajuster la courbe caractéristique de l'alternateur.

Toutes les combinaisons sont possibles. Par exemple la deuxième sous étape de l'étape de montage de l'élément magnétique 62 est mise en oeuvre simultanément à l'étape de montage des roues polaires 20, 22 sur l'arbre 14 à la faveur des doigts d'indexage de la presse de compactage.

L'une des dents adjacentes peut présenter une gorge non débouchante au niveau des extrémités 30a, 30b, comme à la figure 3 et l'autre dents une gorge débouchante au niveau au moins d'une des extrémités 30a, 30b, voir des deux extrémités.

En variante les aimants et les gorges associées d'un même rotor peuvent être de taille différente, c'est-à-dire de hauteur et/ou de longueur et/ou de largeur différente en sorte que l'on peut optimiser la courbe caractéristique de la machine électrique tournante (courant débité en fonction de la vitesse de rotation de l'arbre).

Ainsi qu'il ressort de la description et des dessins le montage des roues polaires sur l'arbre, par exemple à l'aide d'au moins un manchon intermédiaire, permet d'obtenir un meilleur positionnement des gorges usinées avant l'étape de montage des roues polaires de manière indirecte sur l'arbre.

## Revendications

1. Procédé de réalisation d'un rotor à griffes (12) de machine électrique tournante comportant un arbre (14) central et deux roues polaires (20, 22), chaque roue polaire (20, 22) s'étendant globalement radialement par rapport à l'axe principal de l'arbre (14) central, et comportant à sa périphérie externe une série de dents (30) de forme globalement trapézoïdale, qui s'étendent (30) axialement en direction de l'autre roue polaire (22), du type qui comporte :
- une étape de montage des roues polaires (20, 22) sur l'arbre (14) de manière que chaque de manière que chaque dent (30) d'une roue polaire (20, 22) soit située dans l'espace existant entre deux dents (30) consécutives de l'autre roue polaire (20) ;
- une étape d'usinage des faces latérales (68) en vis a vis de deux dents (30) adjacentes appartenant chacune à une roue polaire (20, 22), qui consiste à usiner dans chaque face latérale (68) une gorge axiale (70),
- une étape de montage d'un élément magnétique (62) entre deux dents (30) adjacentes, de manière que l'élément magnétique (62) soit logé en partie dans les gorges axiales (70) usinées dans les faces latérales (68) en vis-à-vis des deux dents (30) adjacentes,
**caractérisé en ce que** l'étape d'usinage des faces latérales (68) des deux dents (30) adjacentes est mise en oeuvre avant l'étape de montage des roues polaires (20, 22) sur l'arbre (14) de manière directe ou indirecte et consiste à usiner la gorge (70) dans la face latérale (68) d'une dent (30) associée, notamment par fraisage, de manière que la gorge (70) soit non débouchante au niveau d'au moins une extrémité axiale (30a, 30b) de la dent (30) associée.

2. Procédé selon la revendication 1, **caractérisé en ce que** l'étape d'usinage consiste à usiner chaque face latérale (68) d'une dent (30) associée, notamment par fraisage, de manière que la gorge (70) soit non débouchante au niveau de l'extrémité axiale externe (30b) de la dent (30) associée, au niveau de laquelle la dent (30) est reliée au bord d'extrémité radiale externe de la roue polaire (20, 22) associée.

3. Procédé selon l'une quelconque des revendications précédentes, **caractérisé en ce que** l'étape d'usinage consiste à usiner la gorge (70) dans la face latérale (68) d'une dent (30) associée, notamment par fraisage, de manière que la gorge (70) soit non débouchante au niveau des deux extrémités axiales (30a, 30b) de la dent (30) associée.

4. Procédé selon l'une quelconque des revendications précédentes, **caractérisé en ce que** l'étape de montage de l'élément magnétique (62) comporte une première sous étape de montage de l'élément magnétique (62) dans la gorge axiale (70) réalisée dans la face latérale (68) d'une première dent (30) des deux dents (30) adjacentes, et une deuxième sous étape de montage de l'élément magnétique (62) dans la gorge axiale (70) réalisée dans la face latérale (68) de la deuxième dent (30) des deux dents (30) adjacentes.

5. Procédé selon la revendication précédente, **caractérisé en ce que** la première sous étape de l'étape de montage de l'élément magnétique (62) est mise en oeuvre antérieurement à l'étape de montage des roues polaires (20, 22) sur l'arbre (14) de manière directe ou indirecte.

6. Procédé selon la revendication précédente, **caractérisé en ce que** la deuxième sous étape de l'étape de montage de l'élément magnétique (62) est mise en oeuvre simultanément à l'étape de montage des roues polaires (20, 22) sur l'arbre (14) de manière directe ou indirecte.

7. Procédé selon l'une quelconque des revendications précédentes, **caractérisé en ce qu'**il comporte une étape d'ajustement de la position axiale de chaque roue polaire (20, 22) par rapport à l'autre roue polaire (22, 20), qui consiste à usiner une face radiale interne (74, 76- 62, 64) de chaque roue polaire.

8. Procédé selon la revendication précédente, **caractérisé en ce que** l'étape d'usinage de la face radiale interne (74, 76-62,64) est mise en oeuvre antérieurement à l'étape de montage des roues polaires (20, 22) sur l'arbre (14) de manière directe ou indirecte.

9. Procédé selon l'une quelconque des revendications précédentes, **caractérisé en ce qu'**il comporte une étape de montage de l'arbre (14) dans au moins un manchon intermédiaire (58, 158) et **en ce que** les roues polaires (20, 22) sont montées à fixation sur le manchon intermédiaire (58, 158).

10. Procédé selon la revendication 9, **caractérisé en ce que** l'étape de montage de l'arbre (14) dans le manchon intermédiaire (58, 58) est mise en oeuvre antérieurement à l'étape de montage des roues polaires (20, 22) sur le manchon intermédiaire (58, 158).

11. Procédé selon la revendication 9 ou 10, **caractérisé en ce qu'**il comporte une étape d'usinage du diamètre externe et interne de chaque roue polaire avant mise en place des roues polaires sur le manchon intermédiaire (58, 158).

12. Procédé selon l'une quelconque des revendications 9 à 11, **caractérisé en ce que** l'étape de montage des roues polaires (20, 22) sur le manchon intermédiaire (58, 158) consiste à emmancher chaque roue polaire (20, 22) sur une portée cylindrique externe du manchon intermédiaire (58, 158).

13. Procédé selon l'une quelconque des revendications 9 à 12, **caractérisé en ce que** le manchon intermédiaire (58) est de forme tubulaire.

14. Procédé selon l'une quelconque des revendications 9 à 12, **caractérisée en ce que** le manchon intermédiaire (158) est étagé et comporte deux manchons tubulaires (58) disposés de part et d'autre d'un noyau (36) de plus grande dimension radiale.

15. Procédé selon la revendication précédente, du type dans lequel l'étape de montage des roues polaires (20, 22) sur le manchon étagé (158) consiste à agencer axialement les roues polaires (20, 22) de part et d'autre d'un noyau (36), de manière que la face d'extrémité axiale interne de chaque roue polaire (20) soit en butée axialement contre une face radiale d'extrémité axiale associée (170, 172) en vis-à-vis du noyau (36),

## Patentansprüche

1. Verfahren zum Herstellen eines Klauenpolläufers (12) einer rotierenden elektrischen Maschine mit einer zentralen Welle (14) und zwei Polrädern (20, 22), wobei sich jedes Polrad (20, 22) bezüglich der Hauptachse der zentralen Welle (14) allgemein radial erstreckt und an seinem Außenumfang eine Reihe von allgemein trapezförmigen Zähnen (30) umfasst, die sich zu dem anderen Polrad (22) hin axial erstrecken (30), wobei das Verfahren Folgendes umfasst:
- einen Schritt der Befestigung der Polräder (20, 22) auf der Welle (14) derart, dass sich jeder Zahn (30) eines Polrads (20, 22) in dem Zwischenraum zwischen zwei aufeinander folgenden Zähnen (30) des anderen Polrads (20) befindet;
- einen Schritt der maschinellen Bearbeitung der einander zugewandten Seitenflächen (68) von zwei benachbarten Zähne (30), die jeweils zu einem Polrad (20, 22) gehören, der darin besteht, in jeder Seitenfläche (68) eine axiale Nut (70) maschinell herauszuarbeiten,
- einen Schritt der Befestigung eines magnetischen Elements (62) zwischen zwei benachbarten Zähnen (30) derart, dass das magnetische Element (62) in den axialen Nuten (70) teilweise aufgenommen wird, die in den einander zugewandten Seitenflächen (68) der beiden benachbarten Zähne (30) maschinell herausgearbeitet wurden,
**dadurch gekennzeichnet, dass** der Schritt der maschinellen Bearbeitung der Seitenflächen (68) der beiden benachbarten Zähne (30) vor dem Schritt der direkten oder indirekten Befestigung der Polräder (20, 22) auf der Welle (14) durchgeführt wird und das maschinelle Herausarbeiten, insbesondere durch Fräsen, der Nut (70) in der Seitenfläche (68) eines zugehörigen Zahns (30) derart, dass die Nut (70) an zumindest einem axialen Ende (30a, 30b) des zugehörigen Zahns (30) nicht durchgängig ist, umfasst.

2. Verfahren nach Anspruch 1, **dadurch gekennzeichnet, dass** der Schritt der maschinellen Bearbeitung die maschinelle Bearbeitung, insbesondere durch Fräsen, jeder Seitenfläche (68) eines zugehörigen Zahns (30) derart, dass die Nut (70) am äußeren axialen Ende (30b) des zugehörigen Zahns (30), an dem der Zahn (30) mit dem Rand des äußeren axialen Endes des zugehörigen Polrads (20, 22) verbunden ist, nicht durchgängig ist, umfasst.

3. Verfahren nach einem der vorhergehenden Ansprüche, **dadurch gekennzeichnet, dass** der Schritt der maschinellen Bearbeitung das maschinelle Herausarbeiten, insbeondere durch Fräsen, der Nut (70) in der Seitenfläche (68) eines zugehörigen Zahns (30) derart, dass die Nut (70) an den beiden axialen Enden (30a, 30b) des zugehörigen Zahns (30) nicht durchgängig ist, umfasst.

4. Verfahren nach einem der vorhergehenden Ansprüche, **dadurch gekennzeichnet, dass** der Schritt der Befestigung des magnetischen Elements (62) einen ersten Unterschritt der Befestigung des magnetischen Elements (62) in der axialen Nut (70), die in der Seitenfläche (68) eines ersten Zahns (30) der beiden benachbarten Zähne (30) hergestellt wurde, und einen zweiten Unterschritt der Befestigung des magnetischen Elements (62) in der axialen Nut (70), die in der Seitenfläche (68) des zweiten Zahns (30) der beiden benachbarten Zähne (30) hergestellt wurde, umfasst.

5. Verfahren nach dem vorhergehenden Anspruch, **dadurch gekennzeichnet, dass** der erste Unterschritt des Schritts der Befestigung des magnetischen Elements (62) vor dem Schritt der direkten oder indirekten Befestigung der Polräder (20, 22) auf der Welle (14) durchgeführt wird.

6. Verfahren nach dem vorhergehenden Anspruch, **dadurch gekennzeichnet, dass** der zweite Unterschritt des Schritts der Befestigung des magnetischen Elements (62) gleichzeitig mit dem Schritt der direkten oder indirekten Befestigung der Polräder (20, 22) auf der Welle (14) durchgeführt wird.

7. Verfahren nach einem der vorhergehenden Ansprüche, **dadurch gekennzeichnet, dass** es einen Schritt der Einstellung der axialen Position jedes Polrads (20, 22) bezüglich des anderen Polrads (22, 20) umfasst, der das maschinelle Bearbeiten einer radialen Innenfläche (74, 76 - 62, 64) jedes Polrads umfasst.

8. Verfahren nach dem vorhergehenden Anspruch, **dadurch gekennzeichnet, dass** der Schritt der maschinellen Bearbeitung der radialen Innenfläche (74, 76 - 62, 64) vor dem Schritt der direkten oder indirekten Befestigung der Polräder (20, 22) auf der Welle (14) durchgeführt wird.

9. Verfahren nach einem der vorhergehenden Ansprüche, **dadurch gekennzeichnet, dass** es einen Schritt der Befestigung der Welle (14) in mindestens einer Zwischenhülse (58, 158) umfasst und dass die Polräder (20, 22) fest an der Zwischenhülse (58, 158) angebracht sind.

10. Verfahren nach Anspruch 9, **dadurch gekennzeichnet, dass** der Schritt der Befestigung der Welle (14) in der Zwischenhülse (58, 158) vor dem Schritt der Befestigung der Polräder (20, 22) auf der Zwischenhülse (58, 158) durchgeführt wird.

11. Verfahren nach Anspruch 9 oder 10, **dadurch gekennzeichnet, dass** es einen Schritt der maschinellen Bearbeitung des Außen- und Innendurchmessers jedes Polrads vor dem Anbringen der Polräder auf der Zwischenhülse (58, 158) umfasst.

12. Verfahren nach einem der Ansprüche 9 bis 11, **dadurch gekennzeichnet, dass** der Schritt der Befestigung der Polräder (20, 22) auf der Zwischenhülse (58, 158) das Aufschieben jedes Polrads (20, 22) auf eine äußere zylindrische Auflagefläche der Zwischenhülse (58, 158) umfasst.

13. Verfahren nach einem der Ansprüche 9 bis 12, **dadurch gekennzeichnet, dass** die Zwischenhülse (58) röhrenförmig ist.

14. Verfahren nach einem der Ansprüche 9 bis 12, **dadurch gekennzeichnet, dass** die Zwischenhülse (158) abgestuft ist und zwei röhrenförmige Hülsen (58) umfasst, die beidseits eines Kerns (36) mit einer größeren Radialabmessung angeordnet sind.

15. Verfahren nach dem vorhergehenden Anspruch, jener Art, bei der der Schritt der Befestigung der Polräder (20, 22) auf der abgestuften Hülle (158) das axiale Anordnen der Polräder (20, 22) beidseits eines Kerns (36) derart, dass die Fläche des inneren axialen Endes jedes Polrads (20) an einer zugewandten radialen Fläche des zugehörigen axialen Endes (170, 172) des Kerns (36) axial anschlägt, umfasst.

## Claims

1. Method for producing a toothed rotor (12) of a rotary electric machine having a central shaft (14) and two pole wheels (20, 22), each pole wheel (20, 22) extending generally radially relative to the main axis of the central shaft (14) and having at its outer periphery a series of teeth (30) of generally trapezoidal shape extending (30) axially toward the other pole wheel (22), of the type comprising:
- a step of mounting the pole wheels (20, 22) on the shaft (14) so that each tooth (30) of one pole wheel (20, 22) is located in the gap between two consecutive teeth (30) of the other pole wheel (20),
- a step of machining the facing lateral faces (68) of two adjacent teeth (30) each belonging to one pole wheel (20, 22) in which an axial groove (70) is machined in each lateral face (68),
- a step of mounting a magnetic element (62) between two adjacent teeth (30) so that the magnetic element (62) is partly housed in the axial grooves (70) machined in the facing lateral faces (68) of the two adjacent teeth (30),
**characterized in that** the step of machining the lateral faces (68) of the two adjacent teeth (30) is carried out before the step of mounting the pole wheels (20, 22) on the shaft (14) directly or indirectly and consists in machining, in particular milling, the groove (70) in the lateral face (68) of an associated tooth (30) so that the groove (70) is non-emergent at one axial end (30a, 30b) at least of the associated tooth (30).

2. Method according to claim 1, **characterized in that** the machining step comprises machining, in particular milling, each lateral face (68) of an associated tooth (30) so that the groove (70) is non-emergent at the outer axial end (30b) of the associated tooth (30) at which the tooth (30) is connected to the outer radial edge of the associated pole wheel (20, 22).

3. Method according to either of the preceding claims, **characterized in that** the machining step consists in machining, in particular milling, the groove (70) in the lateral face (68) of an associated tooth (30) so that the groove (70) is non-emergent at both axial ends (30a, 30b) of the associated tooth (30).

4. Method according to any one of the preceding claims, **characterized in that** the step of mounting the magnetic member (62) comprises a first sub-step of mounting the magnetic member (62) in the axial groove (70) produced in the lateral face (68) of a first tooth (30) of the two adjacent teeth (30) and a second sub-step of mounting the magnetic member (62) in the axial groove (70) produced in the lateral face (68) of the second tooth (30) of the two adjacent teeth (30).

5. Method according to the preceding claim, **characterized in that** the first sub-step of the step of mounting the magnetic member (62) is carried out before the step of mounting the pole wheels (20, 22) on the shaft (14) directly or indirectly.

6. Method according to the preceding claim, **characterized in that** the second sub-step of the step of mounting the magnetic member (62) is carried out simultaneously with the step of mounting the pole wheels (20, 22) on the shaft (14) directly or indirectly.

7. Method according to any one of the preceding claims, **characterized in that** it comprises a step of adjusting the axial position of each pole wheel (20, 22) relative to the other pole wheel (22, 20) consisting in machining one inner radial face (74, 76 - 62, 64) of each pole wheel.

8. Method according to the preceding claim, **characterized in that** the step of machining the inner radial face (74, 76 - 62, 64) is carried out before the step of mounting the pole wheels (20, 22) on the shaft (14) directly or indirectly.

9. Method according to any one of the preceding claims, **characterized in that** it comprises a step of mounting the shaft (14) in at least one intermediate sleeve (58, 158) and **in that** the pole wheels (20, 22) are fixedly mounted on the intermediate sleeve (58, 158).

10. Method according to Claim 9, **characterized in that** the step of mounting the shaft (14) in the intermediate sleeve (58, 58) is carried out before the step of mounting the pole wheels (20, 22) on the intermediate sleeve (58, 158).

11. Method according to claim 9 or 10, **characterized in that** it comprises a step of machining the outside and inside diameters of each pole wheel before placing the pole wheels on the intermediate sleeve (58, 158).

12. Method according to any one of claims 9 to 11, **characterized in that** the step of mounting the pole wheels (20, 22) on the intermediate sleeve (58, 158) consists in fixing each pole wheel (20, 22) onto a cylindrical outer bearing surface of the intermediate sleeve (58, 158).

13. Method according to any one of claims 9 to 12, **characterized in that** the intermediate sleeve (58) is tubular.

14. Method according to any one of claims 9 to 12, **characterized in that** the intermediate sleeve (158) is stepped and comprises two tubular sleeves (58) arranged on either side of a core (36) of greater radial dimension.

15. Method according to the preceding claim, of the type wherein the step of mounting the pole wheels (20, 22) on the stepped sleeve (158) consists in axially arranging the pole wheels (20, 22) on either side of a core (36) so that the inner axial end face of each pole wheel (20) abuts axially against an associated radial face (170, 172) at the axial end facing the core (36).
